# EUROPEAN PATENT SPECIFICATION

(11) **EP 3 614 356 B1**
(45) Date of publication and mention of the grant of the patent: **18.12.2024**
(21) Application number: 18190537.3
(22) Date of filing: 23.08.2018
(51) Int. Cl.: G08G 1/00, B60Q 1/50, B60W 50/00, B60W 30/165

(54) **APPARATUS, PLATOONING VEHICLE, PLATOON OF VEHICLES, METHOD AND COMPUTER PROGRAM FOR A PLATOONING VEHICLE**
VORRICHTUNG, ZUGFAHRZEUG, ZUG VON FAHRZEUGEN, VERFAHREN UND COMPUTERPROGRAMM FÜR EIN ZUGFAHRZEUG
APPAREIL, VÉHICULE DE GROUPEMENT, PELOTON DE VÉHICULES, PROCÉDÉ ET PROGRAMME INFORMATIQUE POUR UN VÉHICULE DE GROUPEMENT

(43) Date of publication of application: 26.02.2020
(73) Proprietor: Volkswagen AG, 38440 Wolfsburg (DE); MAN Truck & Bus SE, 80995 München (DE); Scania CV AB, 151 87 Södertälje (SE)
(72) Inventor: Alieiev, Roman, 39576 Stendal (DE); Hehn, Thorsten, 85055 Ingolstadt (DE); Buburuzan, Teodor, 38118 Braunschweig (DE); Cerwall, Joakim, 11352 Stockholm (SE); Zielinski, Ernst, 44803 Bochum (DE)
(74) Representative: 2SPL Patentanwälte PartG mbB

(56) References cited:
- DE-A1- 102013 006 687
- DE-A1- 102016 012 383
- US-A1- 2006 225 329
- US-A1- 2017 361 762
- US-B1- 9 931 976

## Description

The present invention relates to an apparatus, a platooning vehicle, a platoon of vehicles, a method and a computer program for a platooning vehicle, more particularly, but not exclusively, to a concept for intruder prevention or platoon recognition for vehicles outside the platoon.

Automated or autonomous driving is a field of research and development. One concept of dealing with high traffic loads is platooning, in which vehicles are grouped and which may allow making more efficient use of the road capacity. The groups of vehicles, also referred to as convoys or platoons, may be used to operate the vehicles in the platoon with a short distance or headway between the vehicles, as the vehicles within the platoon may react within a short time delay or simultaneously. This can be achieved by control mechanisms being active between the vehicles of the platoon.

Forming and driving vehicles in platoons has shown many advantages for transportation systems. It may allow fuel reduction by reducing drag force, while coordinated driving may allow more efficient braking and acceleration maneuvers. Additionally, a road operator may benefit from trucks driving in platoons since they occupy less space on the road.

The efficiency of a platoon decreases if the involved trucks cannot follow the desired coordination rules, such as to maintain the optimal distance. If the distance between the trucks is sufficiently large, it is possible that some other vehicle (intentionally or unintentionally) may drive-in and position itself in-between the platoon vehicles. This problem may create challenges for maintaining the desired platoon efficiency.

Document DE 10 2006 050 548 A1 describes a concept for projecting a warning indication to an outside of a vehicle to be recognized by other vehicles. Document EP 3 270 042 A1 describes a concept for adapting a color of a headlight of a vehicle dependent on a road surface condition. Document DE 20 2006 012 787 U1 describes a projector device mounted into an inside mirror of a vehicle to project a light signal onto a projection surface in or on the vehicle. Document EP 3 296 696 A1 discloses a vehicle-mounted projection system for projecting a navigation image onto a specified position on the road surface in front of the vehicle.

Document US 2017/0361762 A1 provides a system and method, which include a light source projector with a positional actuator mounted on a subject vehicle that projects a laser line on a roadway upon which the subject vehicle is traveling. A controller is in communication with a platoon vehicle traveling in front or behind the subject vehicle in a platoon and controls the positional actuator to project the laser line on the roadway between the subject vehicle and the at least one platoon vehicle.

Document US 9,931,976 B1 describes electronic components that may be integrated in objects used by the trucking industry, such as truck, tractor trailer, cargo, and loading bay. These objects may then communicate with each other and with a gateway device to transmit or receive data or commands. The gateway may be configured to attach to the truck, such as by securing to the truck frame or securing to an interior of the truck cab. The gateway may couple to one or more input devices and receive sensor data through the one or more input devices. The gateway may execute steps that allow the gateway to determine safety margins for operating a vehicle and communicating that information to other nearby vehicles.

Document US 2006/0225329 A1 discloses indicators, which show the existence of a convoy of vehicles and the position of a vehicle in the convoy. Safety on the highway is improved for both the convoy and non-convoy vehicles. The ability of convoy vehicles to maintain position in the convoy is improved by the use of indicators. A variety of indicators may be used, such as flags, magnetic signs, projected images, illuminated signs, window decals, or beacons.

There is a demand for an improved concept for controlling a platoon. The independent claims provide an improved concept for controlling a platoon.

Embodiments are based on the finding that likelihood for an intrusion of a platoon can be reduced by making vehicles outside the platoon aware of the platoon and an area occupied by the platoon. It is another finding that such awareness may be achieved using generally intelligible communication. Embodiments may enable vehicles outside the platoon to recognize the platoon before intruding it.

Embodiments provide an apparatus for a platooning vehicle. The platooning vehicle is a member of a platoon of two or more vehicles. The apparatus comprises a communication module configured to make information available to other vehicles. The apparatus further comprises a control module, which is configured to control the communication module. The control module is further configured to determine information on an area of the platoon, and mark the area of the platoon for other vehicles using the communication module. Embodiments enable vehicles outside the platoon to obtain information on the existence of the platoon and its area.

In further embodiments the communication module may be configured to make the information available to other vehicles using one or more elements of the group of optical, acoustical, radar and radio communication signals. Embodiments may use generally intelligible signals to indicate the area of the platoon. Vehicles or operators of vehicles outside the platoon may hence be enabled to receive the information on the area of the platoon without any need of extra communication equipment, e.g. when using optical or visible signals. In some embodiments the communication module comprises a projection module, which is configured to project visual information on a road surface. The control module may be configured to project information on the area of the platoon on the road surface using the projection module. The area of the platoon may hence be seen by other drivers or detected by other vehicles. In further embodiments the communication module may comprise one or more interfaces configured to communicate in a mobile communication system. Embodiments may further use a mobile communication system for communication among vehicles. According to the invention, the control module is configured to provide further information on the platoon using the communication module. The further information comprises one or more elements of the group of information on a status of the platoon, information on a current maneuver of the platoon, and at least information on an upcoming maneuver of the platoon, and information for vehicles outside the platoon. At least in some embodiments additional information may be provided to vehicles outside the platoon. The additional information may support decision making in such vehicles, e.g. whether or not to pass or overtake the platoon.

The control module may be further configured to coordinate the marking of the area with other vehicles being members of the platoon using the communication module. In some embodiments the marking of the platoon may be adapted to the platoon's situation and members. The control module may be further configured to determine the position of the platooning vehicle within the platoon, and mark the area of the platoon depending on the position of the platooning vehicle within the platoon. Using different markings depending on a position within the platoon may allow marking the beginning and the end of the platoon for external vehicles. In further embodiments a distance to a beginning or an end of the platoon or to a gap for intrusion (to slip in) may be indicated, directional information to the next gap for intrusion (or slipping in), respectively.

The control module may be further configured to communicate further information to other vehicles depending on the position of the platooning vehicle within the platoon. Hence, a vehicle leading the platoon may communicate other information than a vehicle at the tail of a platoon. For example, a leading vehicle may inform oncoming traffic on the platoon and potential external vehicles passing the platoon. A vehicle at the tail end of a platoon may communicate with vehicles behind the platoon, which are potential intruders in case they try to pass the platoon. In further embodiments the control module may be configured to project a visual boundary of the platoon onto a road surface using the communication module. The control module may be further configured to use different boundary projections depending on a position of the platooning vehicle in the platoon. Embodiments may enable marking of the platoon as a whole. The control module may be configured to project a visual text message on the road surface using the communication module. The control module may be further configured to use different text messages depending on a position of the platooning vehicle in the platoon. In some embodiments projected text messages may be used to mark the head and the tail of a platoon.

In some embodiments the control module is further configured to monitor whether a vehicle outside the platoon crosses the marked area of the platoon, and to trigger a safety procedure in case a vehicle enters the area of the platoon. Embodiments may enable to define a safety or protected area around a platoon and to trigger safety measures when an outside vehicle enters said area.

Another embodiment is a platooning vehicle comprising the above-described apparatus. A further embodiment is a platoon of multiple platooning vehicles. Yet a further embodiment is a method for a platooning vehicle. The platooning vehicle is a member of a platoon of two or more vehicles. The method comprises determining information on an area of the platoon, and marking the area of the platoon for other vehicles using the communication module.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:
Fig. 1 illustrates an embodiment of an apparatus for a platooning vehicle and an embodiment of a platooning vehicle;
Fig. 2 shows a traffic scenario of an embodiment in a platoon; and
Fig. 3 shows a block diagram of a flow chart of an embodiment of a method for a platooning vehicle.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Some embodiments may differentiate intruders by their ability to communicate and cooperate with other road partners, i.e. to distinguish between "cooperative" and "non-cooperative" intruders. It may be assumed that a "cooperative" intruder enters the platoon unintentionally (for example to avoid a collision on the road) and is willing to cooperate with platoon, e.g. via V2X (vehicle to anything) or C-V2X (cellular V2X) communication to reduce a possible negative impact. The situation may be more challenging if an intruder is not "cooperative" or has no communication capabilities. Even though, there exist a number of approaches for intruder detection, embodiments may also use efficient methods of intruder prevention, i.e. to reduce the likelihood that a potential intruder starts the actual intruding process.

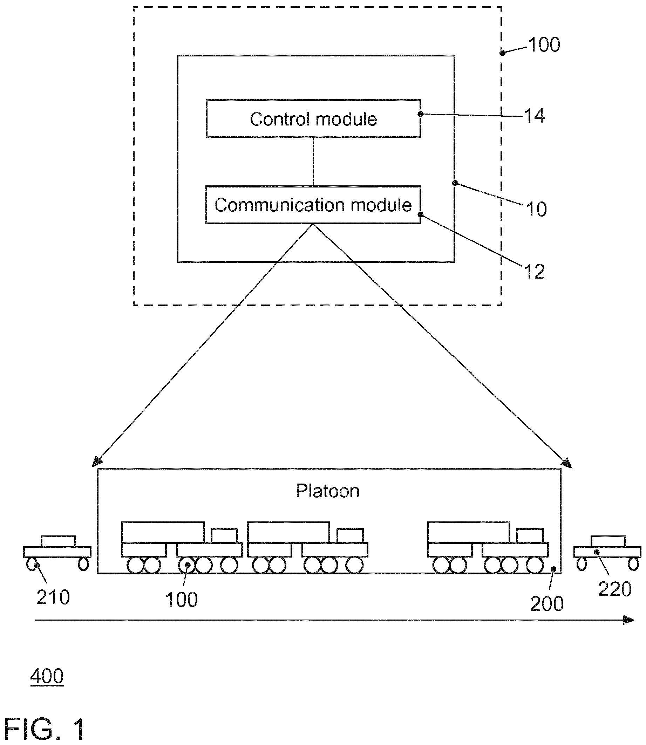

Fig. 1 illustrates an embodiment of an apparatus 10 for a platooning vehicle 100 and an embodiment of a platooning vehicle 100. The platooning vehicle 100 is a member of a platoon 200 of two or more vehicles. In Fig. 1 the exact position of the platooning vehicle in the platoon 200 is indicated at the back end or tail of the platoon 200, however, any other position within the platoon 200 is also conceivable in embodiments. Fig. 1 further illustrates a vehicle 210 following the platoon 200 and a vehicle 220 located in front of the platoon 200. All vehicles 100, 200, 210, 220 are assumed to move from the left to the right in Fig. 1. The apparatus 10 comprises a communication module 12 configured to make information available to other vehicles. The communication module 12 is coupled to a control module 14, which is configured to control the communication module 14. The control module 14 is further configured to determine information on an area of the platoon 200, and to mark the area of the platoon 200 for other vehicles 210, 220 using the communication module 12. Fig. 1 also illustrates an embodiment of a platooning vehicle 100 comprising an embodiment of the apparatus 10. Another embodiment is a platoon 200 of multiple platooning vehicles 100.

As shown in Fig. 1 the communication module 12 is coupled to the control modules 14 at the apparatus 10. In embodiments the control module 14 may be implemented using one or more processing units, one or more processing devices, any means for processing, such as a processor, a computer or a programmable hardware component being operable with accordingly adapted software. In other words, the described functions of the control modules 14 may as well be implemented in software, which is then executed on one or more programmable hardware components. Such hardware components may comprise a general purpose processor, a Digital Signal Processor (DSP), a micro-controller, etc.

In some embodiments, the communication module 12 may be configured to make the information available to other vehicles using one or more elements of the group of optical, acoustical, radar and radio communication signals. The communication module 12 may hence comprise optical communication means, such as one or more elements of the group of an optical lens, a light source, a light emitting diode, a laser, an optical filter, a camera, a photo sensor, a projector, etc. For example, the communication module 12 may comprise a projection module, which is configured to project visual information on a road surface. In some embodiments the control module 14 is configured to project information on the area of the platoon 200 on the road surface using the projection module. The projection module may hence comprise optical projection means, a projector, a laser, etc.

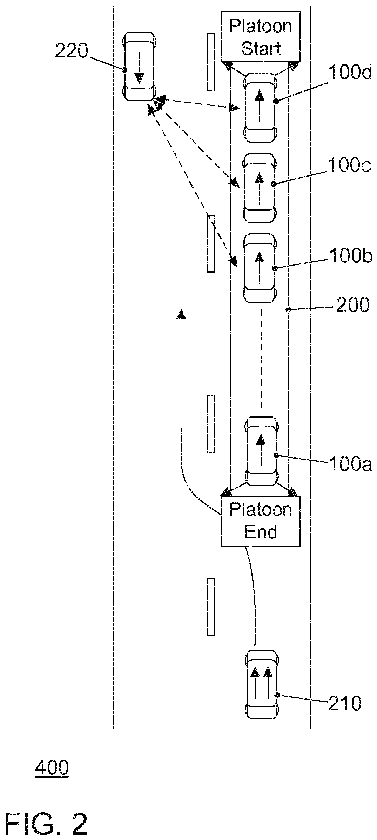

Fig. 2 shows a traffic scenario of an embodiment in a platoon 200 comprising multiple platooning vehicles 100a, 100b, 100c, and 100d. Fig. 2 further shows a vehicle 210 behind the platoon 200 and an oncoming vehicle 220. As indicated in Fig. 2 the last vehicle 100a of the platoon projects a text message "Platoon End" on the road surface and the heading vehicle 100d projects a text message "Platoon Start" on the road surface. According to the invention, the control module 14 is configured to provide further information on the platoon using the communication module 12. According to the invention, the further information comprises information on an upcoming maneuver of the platoon. The further information may further comprise one or more elements of the group of information on a status of the platoon, information on a current maneuver of the platoon, and information for vehicles outside the platoon. As indicated in Fig. 2 using the arrows, the oncoming vehicle 220 may communicate with the vehicles 100d, 100c, 100b of the platoon 200. For example, information on the vehicle's speed and location may be communicated. The platoon 200 may then make such information available to vehicle 210 following the platoon 200.

Again, optical means may be used, for example, through projection of text messages. Fig. 2 only shows boundary marking; however, in embodiments any information may be projected in terms of text or light messages to be read by other drivers or sensed by other vehicles. In case of sensing by other vehicles other communication possibilities are possible in embodiments. For example, optical or acoustical codes may be used in terms of on-off keying to signal certain messages. The control module 14 may be further configured to determine the position of the platooning vehicle 100 within the platoon 200, and mark the area of the platoon 100 depending on the position of the platooning vehicle 100 within the platoon 200. This is indicated in Fig. 2 by the first vehicle 100d marking the beginning or head of the platoon 200 and the last vehicle 100a marking the end or the tail of the platoon 200. The control module 14 may be further configured to communicate further information to other vehicles depending on the position of the platooning vehicle 100 within the platoon. For example, the last vehicle 100a may communicate with following vehicles 210, e.g. to mark the platoon's 200 area and inform whether there is oncoming traffic 220. The first vehicle 100d may communicate with oncoming traffic 220 and inform whether there are vehicles passing the platoon 200.

In the embodiments shown by Fig. 2 the control modules 14 (of the vehicles 100a, 100b, 100c, 100d) are configured to project a visual boundary of the platoon 200 onto a road surface using the communication module 12. The control module 14 is further configured to use different boundary projections depending on a position of the platooning vehicle 100 in the platoon 200, for example, the projections differ depending on whether a vehicle is in front or the back of the platoon. Moreover, the control module 14 is configured to project a visual text message on the road surface using the communication module 12. The control module 14 is further configured to use different text messages depending on a position of the platooning vehicle 100 in the platoon 200, e.g. to mark the beginning and the end of the platoon. In further embodiments the control module 14 may be further configured to coordinate the marking of the area with other vehicles 100b, 100c, 100d being members of the platoon 200 using the communication module 12. The communication module 12 may comprise one or more interfaces configured to communicate in a mobile communication system 400.

Embodiments may reduce a likelihood of a manually driven vehicle 210 to become a platoon intruder. For example, a manual driver 210 might not always know that its certain driving behavior might have a negative impact on the platoon 200, such that for a platoon 200 the driver's behavior might be classified as an intruder. In some embodiments, a platooning vehicle 100, 100a, 100b, 100c, 100d may provide some visual sign on the road surface (the term visual means not only visible directly by human's eye but could also be detectable by vehicular sensors). For example, each vehicle 100a, 100b, 100c, 100d in the platoon 200 may project a so-called "safe platoon area", which can be visible for any manual driver passing the platoon, or vehicle sensors of a passing vehicle. Such sign or marked region projected on the road, besides showing the platoon-area, could also inform the driver about the potential consequences of entering such area. It may also serve as trigger point for certain maneuvers of the platoon. E.g. if a potential intruder crosses the marked area, gaps may be opened between the platooning vehicles to let a passing vehicle slip in in case of oncoming traffic. Some examples of messages communicated are:
- "Do not enter this area now, the platoon is aware of the oncoming exit and will give the way to leave the highway in 1000 m";
- "Estimated time until the platoon will finish splitting to let others enter/leave the highway";
- "Entering the area of the platoon may result in additional delay of 1 min for the manual driver", etc.

In embodiments the communication module 12 may comprise one or more interfaces, which may correspond to any means for obtaining, receiving, transmitting or providing analog or digital signals or information, e.g. any connector, contact, pin, register, input port, output port, conductor, lane, etc. which allows providing or obtaining a signal or information. An interface or the communication module 12 may communicate in a wireless or wireline manner and it may be configured to communicate, i.e. transmit or receive signals, information with further internal or external components. The communication module 12 may comprise further components to enable according communication in a mobile communication system 400, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The communication module 12 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the communication module 12 may serve the purpose of transmitting or receiving or both, transmitting and receiving, information, such as information related to capabilities, application requirements, requests, message interface configurations, feedback, information related to control commands, information on the platoon area, information on the platoon boundary, etc.

Fig. 1 also shows an embodiment of a system 400 comprising embodiments of vehicles 100, 200, 210, 220, which may correspond to base stations and/or mobile transceivers, respectively. In embodiments, communication, i.e. transmission, reception or both, may take place among mobile transceivers/vehicles 100, 200, 210, 220 directly and/or between mobile transceivers/vehicles 100, 200 and a network infrastructure component (e.g. a base station, a network server, a backend server, etc.). Such communication may make use of a mobile communication system 400. In other words such communication may be carried out directly, e.g. by means of Device-to-Device (D2D) communication, which may also comprise Vehicle-to-Vehicle (V2V) or car-to-car communication in case of vehicles 100, 200, 210, 220. Such communication may be carried out using the specifications of a mobile communication system 400.

The mobile communication system 400 may, for example, correspond to one of the Third Generation Partnership Project (3GPP)-standardized mobile communication networks, where the term mobile communication system is used synonymously to mobile communication network. The mobile or wireless communication system may correspond to a mobile communication system of the 5th Generation (5G) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable or configured to communicate with one or more active mobile transceivers/vehicles 100, 200, 210, 220 and a base station transceiver can be located in or adjacent to a coverage area of another base station transceiver, e.g. a macro cell base station transceiver or small cell base station transceiver. Hence, embodiments may provide a mobile communication system 400 comprising two or more mobile transceivers/vehicles 100, 200, 210, 220 and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, a vehicle etc. A mobile transceiver may also be referred to as User Equipment (UE) or mobile in line with the 3GPP terminology. A vehicle 100, 200, 210, 220 may correspond to any conceivable means for transportation, e.g. a car, a bike, a motorbike, a van, a truck, a bus, a ship, a boat, a plane, a train, a tram, etc.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a relay station, a transmission point etc., which may be further subdivided in a remote unit and a central unit.

A mobile transceiver 100, 200, 210, 220 can be associated with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

Mobile transceivers 100, 200, 210, 220 may communicate directly with each other, i.e. without involving any base station transceiver, which is also referred to as Device-to-Device (D2D) communication. An example of D2D is direct communication between vehicles, also referred to as Vehicle-to-Vehicle communication (V2V), car-to-car using 802.11 p, respectively. In embodiments the communication module 12 can be configured to use this kind of communication. In order to do so radio resources are used, e.g. frequency, time, code, and/or spatial resources, which may as well be used for wireless communication with a base station transceiver. The assignment of the radio resources may be controlled by the base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc.

For example, direct Cellular Vehicle-to-Anything (C-V2X), where V2X includes at least V2V, V2-Infrastructure (V2I), etc., transmission according to 3GPP Release 14 can be managed by infrastructure (so-called mode 3) or run in a User Equipment (UE) Autonomous mode (UEA), (so-called mode 4). In embodiments the two or more mobile transceivers 100a, 100b, 100c, 100d, 200, 210, 220 as indicated by Figs.1 and 2 may be registered in the same mobile communication system 400. In other embodiments one or more of the mobile transceivers 100a, 100b, 100c, 100d, 200, 210, 220 may be registered in different mobile communication systems 400. The different mobile communication systems 400 may use the same access technology but different operators or they may use different access technologies as outlined above.

In further embodiments the control module 14 may be further configured to monitor whether a vehicle outside the platoon 200 crosses the marked area, and to trigger a safety procedure in case a vehicle enters the marked area of the platoon 200. For example, if a vehicle enters the marked area of the platoon, a control mechanism may be in place to open up gaps between the platooning vehicles 100a, 100b, 100c, 100d.

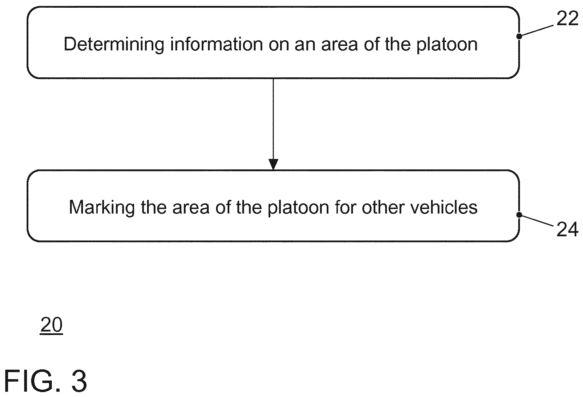

Fig. 3 shows a block diagram of a flow chart of an embodiment of a method 20 for a platooning vehicle 100. The platooning vehicle 100 is a member of a platoon 200 of two or more vehicles 100a, 100b, 100c, 100d. The method 20 comprises determining 22 information on an area of the platoon 200, and marking 24 the area of the platoon for other vehicles 100a, 100b, 100c, 100d.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a (non-transitory) computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the scope of the invention as defined by the appended claims.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### List of reference signs

- 10: apparatus for a vehicle
- 12: communication module
- 14: control module
- 20: method for a platooning vehicle
- 22: determining information on the area of the platoon
- 24: marking the area of the platoon for other vehicles
- 100: platooning vehicle
- 100a: platooning vehicle
- 100b: platooning vehicle
- 100c: platooning vehicle
- 100d: platooning vehicle
- 200: platoon of vehicles
- 210: vehicle following the platoon
- 220: oncoming vehicle
- 400: system

## Claims

1. An apparatus (10) for a platooning vehicle (100), the platooning vehicle (100) being a member of a platoon (200) of two or more vehicles, the apparatus (10) comprising
a communication module (12) configured to make information available to other vehicles; and
a control module (14) configured to control the communication module (14), wherein the control module (14) is further configured to
determine information on an area of the platoon (200), and
mark the area of the platoon (200) for other vehicles using the communication module (12), wherein the control module (14) is configured to provide a message with further information on the platoon using the communication module (12), wherein the further information comprises information on an upcoming maneuver of the platoon.

2. The apparatus (10) of claim 1, wherein the communication module (12) is configured to make the information available to other vehicles using one or more elements of the group of optical, acoustical, radar and radio communication signals.

3. The apparatus (10) of one of the claims 1 or 2, wherein the communication module (12) comprises a projection module, which is configured to project visual information on a road surface, wherein the control module (14) is configured to project information on the area of the platoon (200) on the road surface using the projection module.

4. The apparatus (10) of one of the claims 1 to 3, wherein the communication module (12) comprises one or more interfaces configured to communicate in a mobile communication system (400).

5. The apparatus (10) of one of the claims 1 to 4, wherein the further information comprises one or more elements of the group of information on a status of the platoon, information on a current maneuver of the platoon and information for vehicles outside the platoon.

6. The apparatus (10) of one of the claims 1 to 5, wherein the control module (14) is further configured to coordinate the marking of the area with other vehicles being members of the platoon using the communication module (12).

7. The apparatus (10) of one of the claims 1 to 6, wherein the control module (14) is further configured to determine the position of the platooning vehicle (100) within the platoon (200), and mark the area of the platoon (100) depending on the position of the platooning vehicle (100) within the platoon (200).

8. The apparatus (10) of one of the claims 1 to 7, wherein the control module (14) is further configured to monitor whether a vehicle outside the platoon (200) crosses the marked area, and to trigger a safety procedure in case a vehicle enters the marked area of the platoon (200).

9. The apparatus (10) of one of the claims 1 to 8, wherein the control module (14) is configured to project a visual boundary of the platoon (200) onto a road surface using the communication module (12), wherein the control module (14) is further configured to use different boundary projections depending on a position of the platooning vehicle (100) in the platoon (200).

10. The apparatus (10) of one of the claims 1 to 9, wherein the control module (14) is configured to project a visual text message on the road surface using the communication module (12), wherein the control module (14) is further configured to use different text messages depending on a position of the platooning vehicle (100) in the platoon (200).

11. A platooning vehicle (100) comprising the apparatus (10) of one of the claims 1 to 10.

12. A platoon (200) of multiple platooning vehicles (100) of claim 11.

13. A method (20) for a platooning vehicle (100), the platooning vehicle (100) being a member of a platoon (200) of two or more vehicles, the method comprising
determining (22) information on an area of the platoon (200);
marking (24) the area of the platoon for other vehicles using a communication module (12); and
providing a message with further information on the platoon using the communication module (12), wherein the further information comprises information on an upcoming maneuver of the platoon.

14. A computer program having a program code for performing the method claim 13, when the computer program is executed on a computer, a processor, or a programmable hardware component.

## Patentansprüche

1. Vorrichtung (10) für ein Platooning-Fahrzeug (100), wobei das Platooning-Fahrzeug (100) ein Mitglied eines Platoons (200) aus zwei oder mehr Fahrzeugen ist, die Vorrichtung (10) umfassend
ein Kommunikationsmodul (12), das konfiguriert ist, um Informationen anderen Fahrzeugen zur Verfügung zu stellen; und
ein Steuermodul (14), das konfiguriert ist, um das Kommunikationsmodul (14) zu steuern, wobei das Steuermodul (14) ferner konfiguriert ist zum
Bestimmen von Informationen über einen Bereich des Platoons (200), und
Markieren des Bereichs des Platoons (200) für andere Fahrzeuge unter Verwendung des Kommunikationsmoduls (12), wobei das Steuermodul (14) konfiguriert ist, um unter Verwendung des Kommunikationsmoduls (12) eine Nachricht mit weiteren Informationen über das Platoon bereitzustellen, wobei die weiteren Informationen Informationen über ein bevorstehendes Manöver des Platoons umfassen.

2. Vorrichtung (10) nach Anspruch 1, wobei das Kommunikationsmodul (12) konfiguriert ist, um die Informationen unter Verwendung eines oder mehrerer Elemente aus der Gruppe von optischen, akustischen, Radar- und Funkkommunikationssignalen anderen Fahrzeugen zur Verfügung zu stellen.

3. Vorrichtung (10) nach einem der Ansprüche 1 oder 2, wobei das Kommunikationsmodul (12) ein Projektionsmodul umfasst, das konfiguriert ist, um visuelle Informationen auf eine Straßenoberfläche zu projizieren, wobei das Steuermodul (14) konfiguriert ist, um unter Verwendung des Projektionsmoduls Informationen über den Bereich des Platoons (200) auf die Straßenoberfläche zu projizieren.

4. Vorrichtung (10) nach einem der Ansprüche 1 bis 3, wobei das Kommunikationsmodul (12) eine oder mehrere Schnittstellen umfasst, die konfiguriert sind, um in einem mobilen Kommunikationssystem (400) zu kommunizieren.

5. Vorrichtung (10) nach einem der Ansprüche 1 bis 4, wobei die weiteren Informationen ein oder mehrere Elemente aus der Gruppe von Informationen über einen Status des Platoons, Informationen über ein aktuelles Manöver des Platoons und Informationen für Fahrzeuge außerhalb des Platoons umfassen.

6. Vorrichtung (10) nach einem der Ansprüche 1 bis 5, wobei das Steuermodul (14) ferner konfiguriert ist, um die Markierung des Bereichs mit anderen Fahrzeugen, die Mitglieder des Platoons sind, unter Verwendung des Kommunikationsmoduls (12) zu koordinieren.

7. Vorrichtung (10) nach einem der Ansprüche 1 bis 6, wobei das Steuermodul (14) ferner konfiguriert ist, um die Position des Platooning-Fahrzeugs (100) innerhalb des Platoons (200) zu bestimmen und den Bereich des Platoons (100) in Abhängigkeit von der Position des Platooning-Fahrzeugs (100) innerhalb des Platoons (200) zu markieren.

8. Vorrichtung (10) nach einem der Ansprüche 1 bis 7, wobei das Steuermodul (14) ferner konfiguriert ist, um zu überwachen, ob ein Fahrzeug außerhalb des Platoons (200) den markierten Bereich kreuzt, und einen Sicherheitsprozess auszulösen, falls ein Fahrzeug in den markierten Bereich des Platoons (200) eindringt.

9. Vorrichtung (10) nach einem der Ansprüche 1 bis 8, wobei das Steuermodul (14) konfiguriert ist, um eine visuelle Grenze des Platoons (200) unter Verwendung des Kommunikationsmoduls (12) auf eine Straßenoberfläche zu projizieren, wobei das Steuermodul (14) ferner konfiguriert ist, um in Abhängigkeit von einer Position des Platooning-Fahrzeugs (100) in dem Platoon (200) unterschiedliche Grenzprojektionen zu verwenden.

10. Vorrichtung (10) nach einem der Ansprüche 1 bis 9, wobei das Steuermodul (14) konfiguriert ist, um unter Verwendung des Kommunikationsmoduls (12) eine visuelle Textnachricht auf die Straßenoberfläche zu projizieren, wobei das Steuermodul (14) ferner konfiguriert ist, um in Abhängigkeit von einer Position des Platooning-Fahrzeugs (100) in dem Platoon (200) unterschiedliche Textnachrichten zu verwenden.

11. Platooning-Fahrzeug (100), umfassend die Vorrichtung (10) nach einem der Ansprüche 1 bis 10.

12. Platoon (200) aus mehreren Platooning-Fahrzeugen (100) nach Anspruch 11.

13. Verfahren (20) für ein Platooning-Fahrzeug (100), wobei das Platooning-Fahrzeug (100) ein Mitglied eines Platoons (200) aus zwei oder mehr Fahrzeugen ist, das Verfahren umfassend
Bestimmen (22) von Informationen über einen Bereich des Platoons (200);
Markieren (24) des Bereichs des Platoons für andere Fahrzeuge unter Verwendung eines Kommunikationsmoduls (12); und
Bereitstellen einer Nachricht mit weiteren Informationen über das Platoons unter Verwendung des Kommunikationsmoduls (12), wobei die weiteren Informationen Informationen über ein bevorstehendes Manöver des Platoons umfassen.

14. Computerprogramm, das einen Programmcode aufweist, zum Durchführen des Verfahrens nach Anspruch 13, wenn das Computerprogramm auf einem Computer, einem Prozessor oder einer programmierbaren Hardwarekomponente ausgeführt wird.

## Revendications

1. Appareil (10) destiné à un véhicule de circulation en peloton (100), le véhicule de circulation en peloton (100) étant un membre d'un peloton (200) de deux véhicules ou plus, l'appareil (10) comprenant
un module de communication (12) configuré pour mettre des informations à la disposition d'autres véhicules ; et
un module de commande (14) configuré pour commander le module de communication (14), dans lequel le module de commande (14) est configuré en outre pour
déterminer des informations relatives à une zone du peloton (200), et
marquer la zone du peloton (200) pour d'autres véhicules à l'aide du module de communication (12), dans lequel le module de commande (14) est configuré pour fournir un message avec des informations supplémentaires relatives au peloton à l'aide du module de communication (12), dans lequel les informations supplémentaires comprennent des informations relatives à une manoeuvre à venir du peloton.

2. Appareil (10) selon la revendication 1, dans lequel le module de communication (12) est configuré pour mettre les informations à la disposition d'autres véhicules à l'aide d'un ou plusieurs éléments du groupe de signaux de communication optiques, acoustiques, radar et radio.

3. Appareil (10) selon l'une des revendications 1 ou 2, dans lequel le module de communication (12) comprend un module de projection, qui est configuré pour projeter des informations visuelles sur une surface routière, dans lequel le module de commande (14) est configuré pour projeter des informations relatives à la zone du peloton (200) sur la surface routière à l'aide du module de projection.

4. Appareil (10) selon l'une des revendications 1 à 3, dans lequel le module de communication (12) comprend une ou plusieurs interfaces configurées pour communiquer dans un système de communication mobile (400).

5. Appareil (10) selon l'une des revendications 1 à 4, dans lequel les informations supplémentaires comprennent un ou plusieurs éléments du groupe d'informations relatives à un statut du peloton, d'informations relatives à une manoeuvre actuelle du peloton et d'informations destinées à des véhicules à l'extérieur du peloton.

6. Appareil (10) selon l'une des revendications 1 à 5, dans lequel le module de commande (14) est configuré en outre pour coordonner le marquage de la zone avec d'autres véhicules étant des membres du peloton à l'aide du module de communication (12).

7. Appareil (10) selon l'une des revendications 1 à 6, dans lequel le module de commande (14) est configuré en outre pour déterminer la position du véhicule de circulation en peloton (100) au sein du peloton (200), et marquer la zone du peloton (100) en fonction de la position du véhicule de circulation en peloton (100) au sein du peloton (200).

8. Appareil (10) selon l'une des revendications 1 à 7, dans lequel le module de commande (14) est configuré en outre pour surveiller si un véhicule extérieur au peloton (200) croise la zone marquée, et pour déclencher une procédure de sécurité dans un cas où un véhicule entre dans la zone marquée du peloton (200).

9. Appareil (10) selon l'une des revendications 1 à 8, dans lequel le module de commande (14) est configuré pour projeter une limite visuelle du peloton (200) sur une surface routière à l'aide du module de communication (12), dans lequel le module de commande (14) est configuré en outre pour utiliser différentes projections de limites en fonction d'une position du véhicule de circulation en peloton (100) dans le peloton (200).

10. Appareil (10) selon l'une des revendications 1 à 9, dans lequel le module de commande (14) est configuré pour projeter un message textuel visuel sur la surface routière à l'aide du module de communication (12), dans lequel le module de commande (14) est configuré en outre pour utiliser différents messages textuels en fonction d'une position du véhicule de circulation en peloton (100) dans le peloton (200).

11. Véhicule de circulation en peloton (100) comprenant l'appareil (10) selon l'une des revendications 1 à 10.

12. Peloton (200) de multiples véhicules de circulation en peloton (100) selon la revendication 11.

13. Procédé (20) destiné à un véhicule de circulation en peloton (100), le véhicule de circulation en peloton (100) étant un membre d'un peloton (200) de deux véhicules ou plus, le procédé comprenant
la détermination (22) d'informations relatives à une zone du peloton (200) ;
le marquage (24) de la zone du peloton pour d'autres véhicules à l'aide d'un module de communication (12) ; et
la fourniture d'un message avec des informations supplémentaires relatives au peloton à l'aide du module de communication (12), dans lequel les informations supplémentaires comprennent des informations relatives à une manoeuvre à venir du peloton.

14. Programme informatique ayant un code de programme permettant de mettre en oeuvre la revendication de procédé 13, lorsque le programme informatique est exécuté sur un ordinateur, un processeur, ou un composant matériel programmable.
